# EUROPÄISCHE PATENTSCHRIFT

(11) **EP 2 275 319 B1**
(45) Veröffentlichungstag und Bekanntmachung des Hinweises auf die Patenterteilung: **08.01.2014**
(21) Anmeldenummer: 10007260.2
(22) Anmeldetag: 14.07.2010
(51) Int. Cl.: B62B 3/06

(54) **Flurförderzeug mit einer Rahmenkonstruktion**
Industrial truck with a frame structure
Chariot de manutention doté d'une construction de cadre

(30) Priorität: 18.07.2009 DE 102009033709
(43) Veröffentlichungstag der Anmeldung: 19.01.2011
(73) Patentinhaber: Jungheinrich Aktiengesellschaft, 22047 Hamburg (DE)
(72) Erfinder: Prehn, Volkmar, 24558 Henstedt-Ulzburg (DE)
(74) Vertreter: Hauck Patent- und Rechtsanwälte

(56) Entgegenhaltungen:
- EP-A1- 1 813 502
- EP-A2- 1 275 572
- EP-A2- 1 690 823
- EP-A2- 1 935 750
- DE-A1- 2 552 103

## Beschreibung

Die vorliegende Erfindung betrifft ein Flurförderzeug mit Radarmhub. Das Flurförderzeug weist einen Lastrahmen mit mindestens einem Radarm und einen Fahrzeughauptrahmen auf. Der Lastrahmen ist gegenüber dem Fahrzeughauptrahmen über einen Stellantrieb in seiner Höhe verstellbar.

Fahrzeuge mit Radarmhub können mit ihrem Radarm unter eine Last, beispielsweise eine Palette fahren. Dabei können an dem Fahrzeug zwei parallel verlaufende Radarme oder ein breiter Radarm vorgesehen sein. Zum Anheben der Last wird der Lastrahmen, der mit dem oder den Radarmen versehen ist, üblicherweise um ca. 120 mm angehoben. In der Fachsprache wird dies auch als Niederhub bezeichnet. Mit dem Niederhub können Lasten horizontal transportiert und wieder abgesetzt werden. Die Erfindung betrifft aber nicht nur reine Niederhubfahrzeuge, sondern kann zusätzlich auch bei Fahrzeugen zum Einsatz kommen, die zusätzlich zu dem Niederhub auch einen Hochhub besitzen.

Der gegenüber dem Fahrzeughauptrahmen in seiner Höhe verstellbare Lastrahmen ist mit dem Fahrzeughauptrahmen des Flurförderzeugs über einen verschwenkbare Koppelhebel gekoppelt. Durch einen oder mehrere Stellantriebe wird der Lastrahmen angehoben und abgesenkt. Der Koppelhebel hat dabei die Funktion eines Führungsmittels, das die Bewegung zwischen Fahrzeughauptrahmen und Lastrahmen führt. Ferner dient der Koppelhebel als Kraftübertragungselement, um die Lasträder mittels einer Zugstange oder alternativ mittels einer Druckstange relativ zum Radarm nach unten zu verstellen, um so den Radarm und damit den Lastrahmen anzuheben. Unabhängig von der Ausgestaltung des Lastrahmens mit zwei Lastarmen oder mit einem breiten Lastrahmen, betrifft die Erfindung stets solche Fahrzeuge, bei denen der oder die Lastarme über mindestens zwei separat voneinander betätigbare Lastrollen angehoben werden.

Bei der hier beschriebenen Kinematik können Bauteiltoleranzen zu einer Schiefstellung und zu einer ungleichmäßigen Bewegung der Radarme führen. So kann der Fall auftreten, dass die Radarme unterschiedlich stark angehoben werden oder dass ein Anheben der Radarme nicht synchron erfolgt, wodurch eine Schiefstellung der aufgenommenen Last zumindest zeitweise auftritt. In dem Fall, dass lediglich ein Radarm vorgesehen ist, wird dieser, wie bei der Ausgestaltung mit zwei Radarmen, über ein Paar von Lastrollen angehoben, die an dem Ende des Lastarms angeordnet sind.

Bisher ist bekannt, durch in ihrer Länge einstellbare Zug- oder Druckstangen den Niederhub für ein paralleles Anheben einzustellen. In der Praxis hat sich aber herausgestellt, dass solche längeneinstellbaren Zug- oder Druckstangen in der Montage schwierig einzustellen sind, da die Zug- oder Druckstangen unter den Radarmen verlaufen und so schwer zugänglich sind.

Aus EP 1 362 761 A3 ist ein Niederhub-Flurförderzeug gemäß dem Oberbegriff von Anspruch 1 bekannt, bei dem ein als Koppelhebel ausgebildeter Umlenkhebel vorgesehen ist. Der Umlenkhebel ist an dem Lastteil angelenkt, wobei an einem Ende des Umlenkhebels eine Druckstange angelenkt ist. Das andere Ende des Umlenkhebels ist am Lastteil angelenkt.

Aus EP 1 935 750 A2 ist ein Hubwagen mit einem Antriebsteil und einem relativ zum Antriebsteil anhebbaren Lastteil mit zwei Radarmen bekannt geworden. Zum Anheben des Lastteils ist ein am Ende des Radarms angeordnetes Hebesystem vorgesehen, das einen gelenkig zwischen Lastteil und Antriebsteil gelagerten Dreieckshebel 10 aufweist. An dem Antriebsteil ist eine einzige Lageraufnahme 13 für den Dreieckshebel 10 vorgesehen, die zwei Lagerbohrungen aufweist.

Aus EP 1 690 823 A2 ist ein Flurförderzeug mit einem anhebbaren Antriebsteil und einem vertikal daran geführten Lastteil bekannt, der einen mit Lastrollen abgestützten

Lastrahmen aufweist. Die Lastrollen sind an einer über eine Stange betätigten Schwinge gelagert. Die Stange wird von einem Umlenkhebel einer Hebelanordnung betätigt. Ein in seiner Höhe verstellbares Hubelement besitzt eine zu der Hebelanordnung weisenden Hubbahn, an der der Umlenkhebel abrollt.

Aus EP 1 275 572 A2 ist Flurförderzeug bekannt geworden, das ein Antriebsteil und ein Lastteil aufweist, wobei der Antriebsteil relativ zu dem Lastteil anhebbar ist und der Lastteil mindestens zwei jeweils mit einer Lastrolle versehene Radarme aufweist. Die Lastrollen können über an einer Lagerstelle eines Dreieckshebels schwenkbar gelagerte Stangen betätigt werden. Bei dem bekannten Flurförderzeug ist es möglich, die Dreieckshebel lateral in Längsrichtung zu einer Achse gegeneinander versetzte Positionen anzubringen.

Aus EP 1 813 502 A1 ist ein Niederhubwagen mit Lastrollen bekannt, bei dem die Lastgabel über eine Hebelanordnung mit einem Gelenkdreieck an das Antriebsteil des Niederhubwagens gekoppelt ist. Ein Gelenkpunkt 30 der Hebelanordnung ist über eine Stange 9 mit einer Verbindungsplatte 7 an dem Antriebsteil verbunden. Die Verbindungsplatte 7 kann in ihrer Position an dem Antriebsteil über Langlöcher in der Verbindungsplatte justiert werden. Über in die Verbindungsplatte 7 eingreifende Mittel 34 ist die vertikale Position einer oberen Gelenkachse 31 der Stange 9 einstellbar.

Der vorliegenden Erfindung liegt die Aufgabe zugrunde, ein Flurförderzeug mit einem Niederhub bereit zu stellen, bei dem mit einfachen Mitteln die Niederhubbewegung zuverlässig eingestellt werden kann.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug ist mit einer Rahmenkonstruktion ausgestattet, die einen Lastrahmen mit mindestens einem Radarm und einen Fahrzeughauptrahmen aufweist, der gelegentlich auch als Vorderrahmen bezeichnet wird. Der über den mindestens einen Radarm abgestützte Lastrahmen kann gegenüber dem Fahrzeughauptrahmen über einen Stellantrieb in eine angehobene Position gebracht und wieder abgesenkt werden. An dem Lastrahmen sind zwei Koppelhebel schwenkbar gelagert, die jeweils ein oder mehrere Lasträder an einem freien Ende des Radarms relativ zu diesem verstellen können, um den Niederhub herbeizuführen. Jeder Koppelhebel ist in einer ersten Lagerstelle an dem Lastrahmen und in einer zweiten Lagerstelle an dem Fahrzeugvorderrahmen schenkbar gelagert. Über einen dritten Gelenkpunkt ist jeder der Koppelhebel mit einer Druck- oder Zugstange verbunden. Erfindungsgemäß ist für jeden Koppelhebel die Position der zweiten Lagerstelle relativ zu dem Fahrzeughauptrahmen einstellbar. Ferner kann jeder der Koppelhebel mit seiner zweiten Lagerstelle unabhängig von der Einstellung des anderen Koppelhebels eingestellt werden. Die einstellbare Position des Koppelhebels an dem Fahrzeughauptrahmen bewirkt, dass bei einem Anheben des Lastrahmens abhängig von der gewählten Position des Koppelhebels früher oder später eine Druck- oder Zugkraft auf die Druck- oder Zugstange gegeben wird, so dass die Lasträder früher oder später anheben. Die Festlegung der Position der zweiten Lagerstelle erlaubt, die Hubhöhe für den Lastrahmen richtig einzustellen. Gleichzeitig erlaubt die Festlegung der zweiten Lagerstelle, dass der Lastrahmen sich ohne seitliche Neigung gleichmäßig anhebt. Die Hubbewegung des Lastrahmens kann durch die Einstellung des Koppelhebels und seiner zweiten Lagerstelle relativ zu dem Fahrzeughauptrahmen sicherstellen, dass der Lastrahmen parallel angehoben wird. Im Gegensatz zu einer aus dem Stand der Technik bekannten Lösung, bei der die Länge der Druck- oder Zugstange eingestellt werden kann, ist der Koppelhebel auch während des Montagesprozesses gut zugänglich und kann so ohne weiteres eingestellt werden. Auch kann das Ergebnis der Einstellung direkt am Fahrzeug überprüft werden, ohne dass dieses in eine andere Position gebracht werden muss. Erfindungsmäß sind an dem Fahrzeughauptrahmen zwei längliche Ausnehmungen vorgesehen, in denen jeweils die zweite Lagerstelle der Koppelhebel relativ zu dem Fahrzeughauptrahmen festlegbar ist. Die länglichen Ausnehmungen erstrecken sich bevorzugt parallel zueinander und in Hubrichtung des Lastrahmens, also vertikal an dem Fahrzeughauptrahmen. Zur Einstellung des Niederhubs wird die Position der Koppelhebel jeweils in der entsprechenden Ausnehmung festgelegt. Der besondere Vorteil liegt darin, dass beide Koppelhebel gut zugänglich unabhängig voneinander eingestellt werden können.

In einer bevorzugten Ausgestaltung ist in jeder der Ausnehmungen jeweils ein Gleitstück angeordnet, in dem jeweils die zweite Lagerstelle der Koppelhebel gelagert ist. Über die Lagerung des Koppelhebels in der Lagerstelle kann der Koppelhebel leichtgängig an dem Fahrzeughauptrahmen verschwenken, während die Position des Gleitstücks in der Ausnehmung festgelegt ist.

In einer bevorzugten Ausgestaltung ist die Position des Gleitstücks in jeder der Ausnehmungen über mindestens eine Einstellschraube festlegbar, wobei die Einstellschraube sich bevorzugt in Längsrichtung der Ausnehmung erstreckt. Dies bedeutet, dass das in die Ausnehmung eingesetzte Gleitstück in seiner Position über eine Einstellschraube oder mehrere Einstellschrauben festgelegt werden kann. Bei der Justierung des Niederhubs an dem Fahrzeug kann das Gleitstück in der Ausnehmung verbleiben und durch Lösen bzw. Anziehen der Einstellschraube in die gewünschte Position gebracht werden.

In mindestens einer der Ausnehmungen kann zusätzlich ein elastisches Element vorgesehen sein, das an dem Gleitstück anliegt und mit der Einstellschraube zusammenwirkt. Hierdurch kann die Position des Gleitstücks in der Ausnehmung festgelegt werden und das Gleitstück in der festgelegten Position durch das elastische Element gesichert werden. Das elastische Element besitzt zusätzlich den Vorteil, dass ein Anschlagen des Gleitstücks an der Einstellschraube verhindert wird.

In einer bevorzugten Ausgestaltung besitzt die Zug- oder Druckstange eine vorbestimmte, definierte Länge. Die Einstellung des Niederhubs erfolgt in dieser Ausgestaltung ausschließlich durch die Festlegung des Koppelhebels an dem Fahrzeughauptrahmen und benötigt keine Längeneinstellung der Zug- oder Druckstange, um einen parallelen Niederhub zu erzielen.

In einer bevorzugten Ausgestaltung ist die Position der zweiten Lagerstelle an dem Fahrzeughauptrahmen derart festgelegt, dass im abgesenkten Zustand des Lastrahmens die Zug- oder Druckstangen entlastet sind und die Abstützung der Lasträder unmittelbar am Radarm erfolgt. Hierdurch wird insbesondere bei Flurförderzeugen, die zusätzlich noch mit einer Hochhubeinrichtung ausgestattet sind, sichergestellt, dass das Fahrzeug bei abgesenktem Niederhub und ausgefahrenem Hochhub besonders kippsicher steht und stabil durch die Lasträder gestützt wird.

Eine bevorzugte Ausgestaltung der Erfindung wird nachfolgend anhand der Figuren näher erläutert. Es zeigt:
- Fig. 1: ein Flurförderzeug in einer Schnittansicht von der Seite und
- Fig. 2: eine Detailansicht zur Anbindung des Koppelhebels an dem Vorder- rahmen.

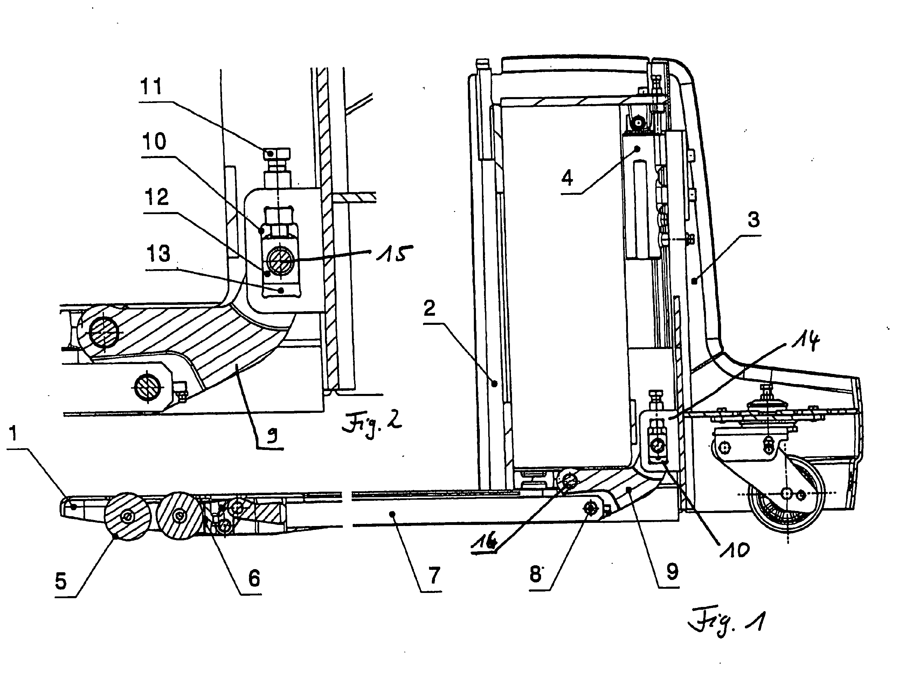

Fig. 1 zeigt in einer Ansicht von der Seite ein Flurförderzeug mit einem abgesenkten Niederhub. Das Flurförderzeug besitzt einen Radarm 1, an dessen freiem Ende Lasträder 5 angeordnet sind, über die das Flurförderzeug gestützt wird. Die Lasträder 5 können über einen Radarmhebel 6 aus der dargestellten Position in dem Radarm ausgeschwenkt werden. Hierdurch wird der Radarm 10 beispielsweise um ca. 120 mm angehoben. Der Radarmhebel 6 wird über eine Druckstange 7 betätigt. Das fahrzeugseitige Ende der Druckstange ist an einem Koppelhebel 9 in einem Gelenkpunkt 8 angelenkt. Durch Verlagerung des Gelenkpunkts 8 könnte die Druckstange auch als Zugstange wirken. Der Koppelhebel 9 ist an einem Lastrahmen 2 des Flurförderzeugs in einem Anlenkpunkt 16 gelagert. Der zweite Arm des Koppelhebels 12 ist in einer Ausnehmung 10 gelagert. Die Ausnehmung 10 ist in einem mit dem Fahrzeughauptrahmen 3 fest verbundenen Block 14 ausgebildet und erstreckt sich in vertikaler Richtung.

Wie in Fig. 2 zu erkennen, ist in der Ausnehmung 10 ein Gleitstück 12 angeordnet. Ein Hebelarm des Koppelhebels 9 ist in dem Gleitstück 12 gelagert. Der Koppelhebel 9 mit seinem Hebelarm kann hierbei um den Lagerpunkt 15 in dem Gleitstück 12 schwenken. Die Position des Gleitstücks 12 in der Ausnehmung 10 wird durch eine Einstellschraube 11 festgelegt. Die Einstellschraube 11 geht durch eine Bohrung, die sich in Längsrichtung der Ausnehmung 10 erstreckt, durch den Block 14 und liegt mit ihrem Ende an dem Gleitstück 12 an. Das Widerlager für das Gleitstück 12 bildet ein elastisches Element 13, das beispielsweise aus Gummi bestehen kann.

Zur Betätigung des Niederhubs wird ein Hubzylinder 11 eines Stellantriebes betätigt. Der Hubzylinder 11 hebt den Lastrahmen 2 gegenüber dem Fahrzeughauptrahmen 3 an. Beim Anheben wird ebenfalls der Lagerpunkt 16 des Koppelhebels 9 angehoben. Der so einseitig angehobene Koppelhebel führt eine Schwenkbewegung aus, da er in Block 14 fest relativ zu dem Fahrzeughauptrahmen gelagert ist. Aufgrund der Schwenkbewegung des Koppelhebels wird eine Kraft auf die Druckstange ausübt und so die Lasträder aus den Radarmen herausgeschwenkt. Soll die Niederhubbewegung nun eingestellt werden, kann über die Einstellschraube 11 die Position des Koppelhebels 9 relativ zum Fahrzeughauptrahmen 3 eingestellt und so der gewünschte Niederhub erreicht werden. Die Einstellung kann dabei für jeden Koppelhebel unabhängig von der Einstellung des anderen Koppelhebels erfolgen, so dass auch ein paralleler Niederhub einfach eingestellt werden kann.

Die vorstehend beschriebene Lagerung der Koppelhebel kann auch lediglich für einen einzigen Radarm mit zwei verstellbaren Lastrollen durchgeführt werden. Durch die Einstellung der Koppelhebel kann dann erreicht werden, dass der einzige Radarm sich gleichmäßig und parallel anhebt. Soll zusätzlich erreicht werden, dass die gesamte Niederhubhöhe beider Radarme eingestellt werden kann, so ist die Lagerung für beide Koppelhebel 9 gegenüber dem Fahrzeughauptrahmen gemeinsam zu verstellen.

## Patentansprüche

1. Flurförderzeug mit einem Fahrzeughauptrahmen und einem mindestens einen Radarm aufweisenden Lastrahmen, der mittels eines Stellantriebes eine Hubbewegung ausführen kann, wobei mindestens zwei schwenkbar gelagerte Koppelhebel (9) vorgesehen sind, von denen jeder in einer ersten Lagerstelle an dem Lastrahmen und in einer zweiten Lagerstelle an dem Fahrzeughauptrahmen schwenkbar gelagert ist und in einem dritten Gelenkpunkt mit einer Druck- oder Zugstange (7) verbunden ist, die ein oder mehrere Lasträder (5) an einem freien Ende des Radarmes (1) relativ zu diesem verstellen kann, um den Lastrahmen in eine angehobene Position zu stellen, wobei für jeden Koppelhebel (9) die Position der zweiten Lagerstelle relativ zu dem Fahrzeughauptrahmen (3) und unabhängig von der Position der zweiten Lagerstelle des anderen Koppelhebels (9) einstellbar ist, **dadurch gekennzeichnet, dass** an dem Fahrzeughauptrahmen (3) zwei längliche Ausnehmungen (10) vorgesehen sind, in denen jeweils die zweite Lagerstelle der Koppelhebel (9) relativ zu dem Fahrzeughauptrahmen (3) festlegbar ist.

2. Flurförderzeug nach Anspruch 1, **dadurch gekennzeichnet, dass** in jeder der Ausnehmungen (10) ein Gleitstück (12) angeordnet ist, in dem jeweils die zweite Lagerstelle der Koppelhebel (9) gelagert ist.

3. Flurförderzeug nach Anspruch 1 oder 2, **dadurch gekennzeichnet, dass** jeweils die Position des Gleitstücks (12) in der Ausnehmung (10) über mindestens eine Einstellschraube (11) festlegbar ist.

4. Flurförderzeug nach Anspruch 3, **dadurch gekennzeichnet, dass** die Einstellschraube (11) sich in Längsrichtung der Ausnehmung (10) erstreckt.

5. Flurförderzeug nach einem der Ansprüche 2 bis 4, **dadurch gekennzeichnet, dass** in mindestens einer der Ausnehmungen ein elastisches Element vorgesehen ist, das an dem Gleitstück (12) anliegt und der Einstellschraube (11) entgegenwirkt.

6. Flurförderzeug nach einem der Ansprüche 1 bis 5, **dadurch gekennzeichnet, dass** die Zug- oder Druckstange (7) eine vorbestimmte definierte Länge aufweist.

7. Flurförderzeug nach einem der Ansprüche 1 bis 6, **dadurch gekennzeichnet, dass** die Position der zweiten Lagerstelle jedes Koppelhebels (9) an dem Fahrzeughauptrahmen (3) derart festgelegt ist, das im abgesenkten Zustand des Lastrahmens die entsprechende Zug- oder Druckstange (7) entlastet ist.

## Claims

1. An industrial truck with a vehicle main frame and a load frame comprising at least one wheel arm, said load frame being able to perform a lifting movement by means of an actuating drive, at least two pivotably mounted coupling levers (9) being provided, each of which being pivotably mounted in a first bearing point on the load frame and in a second bearing point on the vehicle main frame, and being connected at a third pivot point to a pressure rod or tension rod (7) which is able to adjust one or more load wheels (5) at a free end of the wheel arm (1) relative thereto, in order to place the load frame into a raised position, the position of the second bearing point being able to be adjusted relative to the vehicle main frame (3) for each coupling lever (9) and independently of the position of the second bearing point of the other coupling lever (9), **characterised in that** two elongated recesses (10) are provided on the vehicle main frame (3), in which the second bearing point of the coupling levers (9) is able to be secured relative to the vehicle main frame (3) respectively.

2. The industrial truck according to Claim 1, **characterised in that** a sliding part (12) is arranged in each of the recesses (10), the second bearing point of the coupling levers (9) being mounted in each case in said sliding part.

3. The industrial truck according to Claim 1 or 2, **characterised in that** the position of the sliding part (12) in the recess (10) may be secured in each case via at least one adjusting screw (11).

4. The industrial truck according to Claim 3, **characterised in that** the adjusting screw (11) extends in the longitudinal direction of the recess (10).

5. The industrial truck according to one of Claims 2 to 4, **characterised in that** a resilient element is provided in at least one of the recesses, said resilient element bearing against the sliding part (12) and counteracting the adjusting screw (11).

6. The industrial truck according to one of Claims 1 to 5, **characterised in that** the tension rod or pressure rod (7) has a predetermined defined length.

7. The industrial truck according to one of Claims 1 to 6, **characterised in that** the position of the second bearing point of each coupling lever (9) is secured to the vehicle main frame (3) such that in the lowered state of the load frame the corresponding tension rod or pressure rod (7) is relieved of load.

## Revendications

1. Chariot de manutention doté d'un cadre principal de véhicule et d'un cadre de charge présentant au moins un bras de roue qui, au moyen d'un servomoteur, peut effectuer un mouvement de levage, au moins deux leviers d'accouplement (9) supportés de façon pivotante étant prévus, dont chacun est supporté de façon pivotante dans un premier emplacement de palier sur le cadre de charge et dans un deuxième emplacement de palier sur le cadre principal de véhicule et est raccordé, dans un troisième point d'articulation, à une tige de pression ou de traction (7) qui peut déplacer une ou plusieurs roues de charge (5) à une extrémité libre du bras de roue (1) par rapport à celui-ci pour placer le cadre de charge dans une position relevée, la position du deuxième emplacement de palier étant, pour chaque levier d'accouplement (9), réglable par rapport au cadre principal de véhicule (3) et indépendamment de la position du deuxième emplacement de palier de l'autre levier d'accouplement (9), **caractérisé en ce que**, sur le cadre principal de véhicule (3), il est prévu deux creux (10) oblongs dans lesquels respectivement le deuxième emplacement de palier des leviers d'accouplement (9) peut être déterminé par rapport au cadre principal de véhicule (3).

2. Chariot de manutention selon la revendication 1, **caractérisé en ce que**, dans chacun des creux (10), il est disposé une pièce de glissement (12) dans laquelle le deuxième emplacement de palier des leviers d'accouplement (9) est respectivement supporté.

3. Chariot de manutention selon la revendication 1 ou 2, **caractérisé en ce que** la position de la pièce de glissement (12) dans le creux (10) peut être déterminée respectivement par le biais d'au moins une vis de réglage (11).

4. Chariot de manutention selon la revendication 3, **caractérisé en ce que** la vis de réglage (11) s'étend dans la direction longitudinale du creux (10).

5. Chariot de manutention selon une des revendications 2 à 4, **caractérisé en ce que**, dans au moins un des creux, il est prévu un élément élastique qui s'appuie contre la pièce de glissement (12) et agit en opposition à la vis de réglage (11).

6. Chariot de manutention selon une des revendications 1 à 5, **caractérisé en ce que** la tige de pression ou de traction (7) présente une longueur définie prédéterminée.

7. Chariot de manutention selon une des revendications 1 à 6, **caractérisé en ce que** la position du deuxième emplacement de palier de chaque levier d'accouplement (9) est déterminée sur le cadre principal de véhicule (3) de telle sorte que, dans l'état abaissé du cadre de charge, la tige de pression ou de traction (7) correspondante est déchargée.
